# DEMANDE DE BREVET EUROPEEN

(11) **EP 1 104 708 A1**
(43) Date de publication de la demande: **06.06.2001**
(21) Numéro de dépôt: 00403345.2
(22) Date de dépôt: 30.11.2000
(51) Int. Cl.: B60H 1/24

(54) **Dispositif de traitement d'air destiné à l'habitacle d'un véhicule automobile**

(30) Priorité: 03.12.1999 FR 9915249
(71) Demandeur: Renault, 92100 Boulogne Billancourt (FR)
(72) Inventeur: Muller, Marc, 27600 Gaillon (FR)

(57) **Abrégé**

Dispositif de traitement d'air destiné à l'habitacle d'un véhicule automobile, comportant une unité centrale (1) munie de sorties de distribution (4) de l'air vers l'habitacle dudit véhicule automobile, caractérisé en ce qu'au moins un conduit de distribution (41), destiné à conduire le flux d'air vers des buses de ventilation (11) situées dans une première région de l'habitacle du véhicule, comporte des piquages (8) destinés à alimenter une seconde région de l'habitacle du véhicule.

## Description

L'invention se rapporte à un dispositif de traitement d'air destiné à l'habitacle d'un véhicule automobile, et plus particulièrement un dispositif de traitement de l'air comportant des moyens de distribution particulièrement simplifiés.

On connaît dans l'état de la technique des dispositifs de traitement d'air permettant le dégivrage du pare-brise ainsi que le chauffage et la ventilation de l'habitacle d'un véhicule automobile.

De tels dispositifs se composent d'une unité principale capable de produire de l'air chaud par l'intermédiaire du passage de l'air extérieur au travers d'un aérotherme et de l'air froid par l'intermédiaire du passage de cet air extérieur au travers d'un évaporateur. Un volet de distribution rêgle le débit d'air traversant l'aérotherme.

En aval de l'unité principale, se situent des conduits distincts de distribution destinés à diriger l'air vers différentes régions de l'habitacle du véhicule telles que le pare-brise, le visage et les pieds de l'automobiliste et du ou des passager(s). Des volets de distribution, situés de manière générale en sortie de l'unité principale, permettent l'orientation de l'air vers les conduits désirés.

Le problème posé par ces solutions selon l'état de la technique réside dans la complexité des sorties de l'unité principale ainsi que dans le nombre trop élevé des conduits de distribution. En effet, la distinction faite entre chaque sortie de l'unité principale nécessite de disposer d'une place suffisante pour implanter les conduits de distribution correspondant et engendre aussi un coût de fabrication relativement important pour la fonction diffusion d'air.

L'invention a pour objet de remédier à ces inconvénients en proposant un dispositif de distribution d'air simplifié.

L'invention a donc pour objet un dispositif de traitement d'air destiné à l'habitacle d'un véhicule automobile, comportant une unité centrale munie de sorties de distribution de l'air vers l'habitacle dudit véhicule automobile, caractérisé en ce qu'au moins un conduit de distribution, destiné à conduire le flux d'air vers des buses de ventilation situées dans une première région de l'habitacle du véhicule, comporte des piquages destinés à alimenter une seconde région de l'habitacle du véhicule.

Selon une caractéristique de l'invention, les buses de ventilation comportent des moyens de fermeture destinés à partager le flux d'air entre lesdites buses de ventilation et les piquages.

Selon une autre caractéristique de l'invention, les piquages sont situés dans une zone de faible pression dans le conduit de distribution.

Selon une autre caractéristique de l'invention, les piquages sont situés perpendiculairement au flux d'air circulant dans le conduit de distribution.

Selon une autre caractéristique de l'invention, les piquages sont réalisés dans un coude du conduit de distribution.

Selon une autre caractéristique de l'invention, les piquages sont des trous réalisés dans le conduit de distribution.

Selon une autre caractéristique de l'invention, les piquages sont portés par des conduits secondaires, reliés au conduit de distribution.

Selon une autre caractéristique de l'invention, les piquages sont destinés à envoyer l'air en direction des pieds des utilisateurs du véhicule.

D'autres avantages et caractéristiques de l'invention seront mis en évidence dans la description suivante, donnée à titre d'exemple, en référence aux dessins annexés parmi lesquels :
- la figure 1 représente un dispositif de traitement d'air selon l'état de la technique.
- la figure 2 représente une partie d'un dispositif de traitement d'air selon l'invention.
- la figure 3 représente un détail, selon un premier mode de fonctionnement, des moyens de distribution de l'air suivant un exemple de réalisation du dispositif de traitement d'air conforme à l'invention.
- la figure 4 représente un détail, selon un second mode de fonctionnement, des moyens de distribution de l'air suivant un exemple de réalisation dudit dispositif de traitement d'air conforme à l'invention.
- la figure 5 représente une partie du dispositif de traitement d'air selon un exemple de réalisation conforme à l'invention.
- la figure 6 représente une partie du dispositif de traitement d'air selon un autre exemple de réalisation conforme à l'invention.

Dans la description qui va suivre, des chiffres de référence identique désignent des éléments identiques ou de fonction similaire.

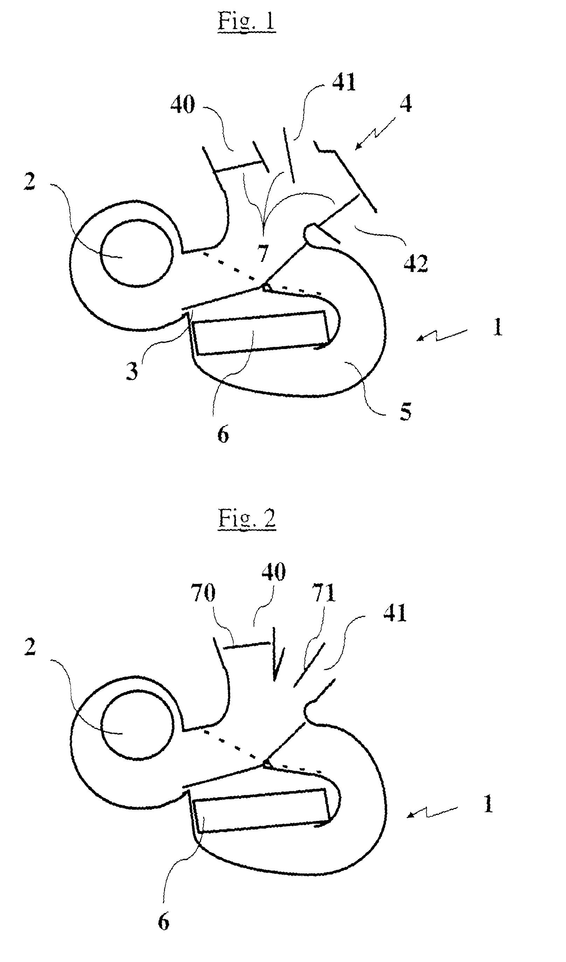

La figure 1 représente une unité principale 1 d'un dispositif de traitement d'air selon un exemple de réalisation connu dans l'état de la technique.

L'air extérieur est admis dans l'unité principale 1 à travers une entrée d'air, non représentée, par l'intermédiaire d'un générateur de débit d'air 2, appelé pulseur.

Dans un exemple de réalisation où le dispositif de traitement d'air permet un fonctionnement en air conditionné, un évaporateur, non représenté, permettant le refroidissement de l'air, s'intercale avant ou après le pulseur 2.

En aval du pulseur 2 se trouve un premier volet de sélection 3 dont la position permet d'envoyer l'air directement vers des sorties de distribution 4 ou vers un canal de chauffage 5, à l'entrée duquel se trouve un aérotherme 6.

De cette manière, lorsque l'air extérieur entre dans l'unité centrale 1, quand le premier volet de sélection 3 est en position tel que représenté sur la figure 1, l'air est directement envoyé vers les sorties de distribution 4. Lorsque le premier volet de sélection 3 est dans la position représentée selon les pointillés dans la figure 1, l'air extérieur traverse l'aérotherme 6 et le canal de chauffage 5, avant d'être amené vers les sorties de distribution 4.

A la sortie de l'unité principale 1, se trouvent trois sorties de distribution 4 :
- une première sortie alimente un ou plusieurs conduits de distribution 40 qui dirigent l'air vers une ou plusieurs buses 10 afin d'assurer la fonction de dégivrage, à titre d'exemple.
- une seconde sortie alimente des conduits de distribution 41 qui dirigent l'air vers des buses de ventilation 11, orientées sensiblement au niveau de la tête et du buste du conducteur et du passager.
- une troisième sortie alimente des conduits de distribution 42 qui dirigent l'air vers des buses, non représentées, orientées vers les pieds du conducteur et du passager.

A chaque sortie de distribution 4, se trouvent des seconds volets de sélection 7. En fonction de la position des volets, l'air chaud ou froid est dirigé vers la ou les buses 10 de dégivrage et/ou les buses 11 de ventilation et/ou les buses orientées vers les pieds des utilisateurs.

L'exemple connu dans l'état de la technique qui vient d'être décrit montre bien une séparation des sorties de l'unité principale. En effet, chaque endroit de l'habitacle est desservi par une sortie de distribution 4 différente.

Cette disposition pose non seulement des problèmes de place lors de son implantation dans le véhicule mais également des problèmes liés au coût de réalisation de l'ensemble du dispositif de traitement de l'air. En effet, chaque sortie de l'unité principale dispose de son propre réseau de conduits de distribution.

La figure 2 représente un exemple de réalisation d'un dispositif de traitement de l'air selon l'invention.

Dans cet exemple de réalisation, une unité principale 1 comporte un pulseur 2 et un premier volet de sélection 3 permettant de diriger l'air directement vers des sorties de distribution 4 ou en passant par un canal de chauffage 5 et par un aérotherme 6.

A la sortie de l'unité principale 1 se trouvent deux sorties de distribution 4 :
- une première sortie, liée à un volet secondaire de sélection 70, alimente un ou des conduits de distribution 40 qui dirigent l'air vers une ou plusieurs buses 10, afin d'assurer la fonction de dégivrage, à titre d'exemple.
- une seconde sortie, liée à un volet secondaire de sélection 71, alimente des conduits de distribution 41 qui dirigent l'air non seulement vers une première région de l'habitacle du véhicule par l'intermédiaire de buses de ventilation 11, c'est-à-dire pour le buste et la tête des utilisateurs, mais aussi vers une seconde région de l'habitacle du véhicule située près des pieds desdits utilisateurs. Cette fonction est obtenue en réalisant des piquages 8 sur les conduits de distribution 41.

A titre d'exemple, les piquages 8 sont des perçages réalisés dans les conduits de distribution 41.

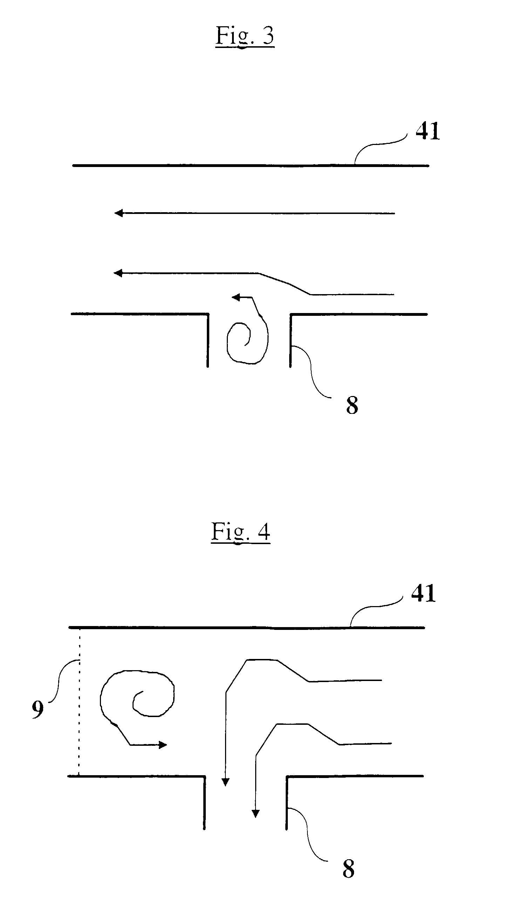

Les figures 3 et 4 montrent de manière détaillée les piquages 8 et le parcours de l'air en fonction du résultat souhaité par les utilisateurs.

D'une manière connue, le passage de l'air au travers des buses de ventilation 11 est déterminé par des moyens de fermeture 9 qui se situent en partie terminale des conduits 41.

La position de ces moyens de fermeture 9, qui sont à titre d'exemple des volets mobiles, peut être commandée par les utilisateurs du véhicule, au moyen par exemple d'un curseur. La position du curseur va déterminer l'orientation des volets et, par conséquent, la quantité d'air envoyée vers les buses de ventilation 11 d'une part, et d'autre part vers les piquages 8 dirigés vers les pieds des utilisateurs.

En position de totale ouverture des volets mobiles 9, tels que représentés sur la figure 3, tout le flux d'air qui s'engouffre dans les conduits de distribution 41 est dirigé vers les buses de ventilation 11. Le diamètre des piquages 8 est suffisamment inférieur au diamètre des conduits de distribution 41 pour ne générer qu'une perte de charge minime. Dans ce cas, les piquages 8 peuvent au contraire engendrer un effet venturi provoquant une aspiration d'air et donc une augmentation du débit d'air en direction des buses de ventilation 11.

En position de totale fermeture volets mobiles 9, comme représenté sur la figure 4, les conduits de distribution 41 se comportent comme des tunnels dont la pression est supérieure à la pression atmosphérique. Les piquages 8 se comportent, eux, comme des coudes et dirigent l'air vers les pieds des utilisateurs, tandis qu'un faible volume d'air reste niché dans la partie du conduit en aval desdits piquages 8.

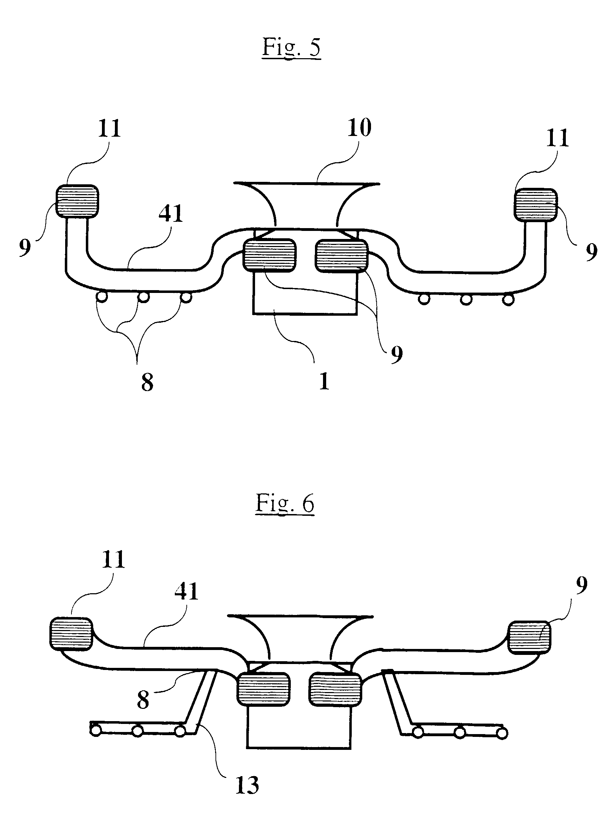

Les figures 5 et 6 représentent des vues d'ensemble de deux exemples de réalisation de dispositifs de traitement d'air conformes à l'invention.

Il est nécessaire de positionner correctement les piquages 8, vers les pieds des utilisateurs, afin de minimiser les pertes de charges et les turbulences. Préférentiellement, ces piquages 8 seront réalisés dans des zones de faible pression pour minimiser les fuites lorsque les volets mobiles 9 sont ouverts (cas où on désire diriger le flux d'air vers les buses de ventilation).

Dans un exemple de réalisation, les piquages 8 sont perpendiculaires au flux principal d'air circulant dans les conduits de distribution 41. Dans un autre exemple de réalisation, les piquages 8 sont dans un coude, dans la partie opposée à celle subissant la pression dynamique du flux d'air.

Dans l'exemple de réalisation représenté figure 5, les éléments de structure du véhicule, non représentés, obligent à couder les conduits de distribution 41 vers le bas, c'est-à-dire en direction des pieds des utilisateurs du véhicule. Dans ce cas, les piquages 8 sont réalisées directement sur les conduits de distribution 41, au niveau des pieds du conducteur et du passager.

Dans l'exemple de réalisation représenté figure 6, dans un autre exemple de réalisation, il n'est pas possible, faute de place, de couder les conduits de distribution 41. Dans ce cas, il est nécessaire de prévoir des conduits secondaires 13, liés aux conduits de distribution 41 et portant les piquages 8.

De cette manière, le dispositif de traitement d'air selon l'invention permet de diminuer fortement les coûts de fabrication dudit dispositif selon l'état de la technique.

De plus, ayant supprimé une sortie 4, un volet secondaire 7 et les conduits de distribution correspondants, la taille du dispositif est réduite et son implantation devient plus simple dans le véhicule.

Enfin, le parcours de l'air dans le dispositif est plus direct, la perte de charge est donc réduite dans le circuit, ce qui diminue le bruit dû aux turbulences.

Le dispositif de traitement d'air ne se limite pas aux exemples de réalisation précédemment décrits mais englobe tout dispositif de traitement d'air destiné à l'habitacle d'un véhicule automobile, comportant une unité centrale munie de sorties de distribution de l'air vers l'habitacle dudit véhicule automobile, caractérisé en ce qu'au moins un conduit de distribution alimentant une première région de l'habitacle du véhicule, comporte des piquages destinés à alimenter une seconde région de l'habitacle dudit véhicule.

## Revendications

1. Dispositif de traitement d'air destiné à l'habitacle d'un véhicule automobile, comportant une unité centrale (1) munie de sorties de distribution (4) de l'air vers l'habitacle dudit véhicule automobile, caractérisé en ce qu'au moins un conduit de distribution (41), destiné à conduire le flux d'air vers des buses de ventilation (11) situées dans une première région de l'habitacle du véhicule, comporte des piquages (8) destinés à alimenter une seconde région de l'habitacle du véhicule.

2. Dispositif de traitement d'air selon la revendication 1, caractérisé en ce que les buses de ventilation (11) comportent des moyens de répartition (9) destinés à partager le flux d'air entre lesdites buses de ventilation (11) et les piquages (8).

3. Dispositif de traitement d'air selon l'une quelconque des revendications précédentes, caractérisé en ce que les piquages (8) sont situés dans une zone de faible pression dans le conduit de distribution (41).

4. Dispositif de traitement d'air selon l'une quelconque des revendications précédentes, caractérisé en ce que les piquages (8) sont situés perpendiculairement au flux d'air circulant dans le conduit de distribution (41).

5. Dispositif de traitement de l'air selon l'une quelconque des revendications précédentes, caractérisé en ce que les piquages (8) sont réalisés dans un coude du conduit de distribution (41).

6. Dispositif de traitement d'air selon l'une quelconque des revendications précédentes, caractérisé en ce que les piquages (8) sont des trous réalisés dans le conduit de distribution (41).

7. Dispositif de traitement d'air selon l'une quelconque des revendications 1 à 5, caractérisé en ce que les piquages (8) sont portés par des conduits secondaires (13), reliés au conduit de distribution (41).

8. Dispositif de traitement d'air selon l'une des revendications précédentes, caractérisé en ce que les piquages (8) sont destinés à envoyer l'air en direction des pieds des utilisateurs du véhicule.
